# EUROPÄISCHE PATENTSCHRIFT

(11) **EP 3 924 257 B1**
(45) Veröffentlichungstag und Bekanntmachung des Hinweises auf die Patenterteilung: **24.04.2024**
(21) Anmeldenummer: 20706421.3
(22) Anmeldetag: 14.02.2020
(51) Int. Cl.: B65B 3/00, B65B 35/06, B65B 43/42, B65B 43/54, B65G 47/02, B65G 47/12

(54) **VORRICHTUNG UND VERFAHREN ZUM EINLEGEN VON MISCHKUGELN IN PHARMAZEUTISCHE BEHÄLTNISSE**
DEVICE AND METHOD FOR INSERTING MIXING BALLS IN PHARMACEUTICAL CONTAINERS
DISPOSITIF ET PROCÉDÉ POUR INSÉRER DES BOULES DE MÉLANGE DANS DES RÉCIPIENTS PHARMACEUTIQUES

(30) Priorität: 14.02.2019 DE 102019201950
(43) Veröffentlichungstag der Anmeldung: 22.12.2021
(73) Patentinhaber: Syntegon Technology GmbH, 71332 Waiblingen (DE)
(72) Erfinder: KRAUß, Ulrich, 74532 Ilshofen (DE); HUMPFER, Steffen, 74589 Satteldorf (DE); STAEUDLE, Reiner, 74585 Rot am See (DE); SCHMIEG, Reinhold, 74599 Wallhausen (DE)
(74) Vertreter: DREISS Patentanwälte PartG mbB
(86) Internationale Anmeldenummer: PCT/EP2020/053828
(87) Internationale Veröffentlichungsnummer: WO 2020/165380

(56) Entgegenhaltungen:
- DE-A1-102005 026 986
- DE-A1-102006 024 072
- DE-U1-202017 103 606

## Beschreibung

### Technisches Gebiet

Die Erfindung betrifft eine Vorrichtung sowie ein Verfahren zum Einlegen von Mischkugeln in pharmazeutische Behältnisse. Derartige, aus Metall oder Glas bestehende Mischkugeln werden verwendet, um vor der Entnahme von Pharmazeutika aus dem Behältnis am Boden des Behältnisses abgelagerte Stoffe durch Schütteln des Behältnisses zu lösen bzw. diese gleichmäßig zu verteilen. Die Vorrichtung ist insbesondere Bestandteil einer Abfüllanlage zum Befüllen und Verschließen der pharmazeutischen Behältnisse mit den Pharmazeutika.

### Stand der Technik

Aus der DE 10 2006 024 072 A1 der Anmelderin ist eine Vorrichtung mit den Merkmalen des Oberbegriffs des Anspruchs 1 bekannt. Die bekannte Vorrichtung umfasst eine Transporteinrichtung, bei der die pharmazeutischen Behältnisse in Aufnahmen bzw. Zellen der Transporteinrichtung in gleichmäßigen Abständen in Form einer Reihe angeordnet sind. Die Behältnisse gelangen bei ihrer taktweisen Förderung in den Bereich einer Zuführeinrichtung für die Mischkugeln, die entsprechend der Anordnung der Behältnisse in den Aufnahmen der Transporteinrichtung eine Vielzahl von mittels Unterdruck arbeitenden Vakuumnadeln aufweisen, die in einer Übernahmestellung jeweils eine Mischkugel aus einem Vorratsspeicher für die Mischkugeln entnehmen und in einer mit den Öffnungen der Behältnisse ausgerichteten Übergabeposition die jeweiligen Mischkugeln in die Behältnisse abgeben bzw. einlegen. Wesentlich dabei ist, dass die pharmazeutischen Behältnisse zuvor mittels geeigneter Einrichtungen in die einzelnen Aufnahmen der Transporteinrichtung eingeschleust werden müssen, was einen vorrichtungstechnischen Aufwand erfordert.

Weiterhin ist es aus der DE 202 16 300 U1 der Anmelderin bekannt, pharmazeutische Behältnisse in stapelbaren Trays, die als Transportbehältnisse dienen, der Abfüllanlage zuzuführen. Die Transportbehältnisse dienen dem Transport der Behältnisse vom Hersteller der Behältnisse zu dem Abfüller bzw. der Abfüllanlage. Im Bereich der Abfüllanlage werden die pharmazeutischen Behältnisse mittels eines Handhabungsroboters o.ä. entstapelt und aus den Aufnahmen des Trays in die Aufnahmen der Transporteinrichtung eingebracht.

DE 10 2005 026 986 A1 offenbart eine Vorrichtung mit Merkmalen des Anspruchs 1.

### Offenbarung der Erfindung

Die Vorrichtung zum Einlegen von Mischkugeln in pharmazeutische Behältnisse mit den Merkmalen des Anspruchs 1 hat den Vorteil, dass sie gegenüber dem Stand der Technik ein vereinfachtes Handling ermöglicht. Insbesondere ist es - im Gegensatz zum Stand der Technik - nicht erforderlich, die Behältnisse aus dem Transportbehältnis zu entnehmen bzw. in Aufnahmen einer Transporteinrichtung anzuordnen, bevor die Mischkugeln in die Behältnisse eingelegt werden. Hierzu schlägt es die Lehre der Erfindung vor, dass die Transporteinrichtung zum Transport von Transportbehältnissen (für die pharmazeutischen Behältnisse) ausgebildet ist, wobei in den Transportbehältnissen jeweils ein Aufnahmeelement zur Aufnahme einer Vielzahl von pharmazeutischen Behältnissen vorgesehen ist, und wobei eine Zentriereinrichtung für das Aufnahmeelement vorgesehen ist, die die in dem Aufnahmeelement angeordneten Behältnisse zu der Zuführeinrichtung für die Mischkugeln in der Übergabeposition für die Mischkugeln in die pharmazeutischen Behältnisse ausrichtet.

Mit anderen Worten gesagt bedeutet dies, dass es zum Einlegen der Mischkugeln in die pharmazeutischen Behältnisse lediglich erforderlich ist, die in den Aufnahmen des Transportbehältnisses bzw. dem Aufnahmeelement befindlichen Öffnungen der pharmazeutischen Behältnisse zu der Zuführeinrichtung für die Mischkugeln auszurichten. Dies umfasst insbesondere eine Anordnung bzw. Positionierung der Behältnisse derart, dass die Öffnungen der pharmazeutischen Behältnisse, über die Mischkugeln in die pharmazeutischen Behältnisse eingelegt werden, in vertikaler Richtung ausgerichtet sind, sodass durch Schwerkraftwirkung die Mischkugeln in die Behältnisse eingelegt werden können. Eine derartige Vorrichtung ermöglicht es insbesondere auch im Rahmen einer Abfüllanlage, ein insbesondere anschließend stattfindendes Befüllen der Behältnisse mit dem Pharmazeutika ebenfalls in einen Zustand der Behältnisse vornehmen zu können, bei dem die Behältnisse in den Aufnahmen des Aufnahmeelements bzw. dem Transportbehältnis angeordnet sind.

Vorteilhafte Weiterbildungen der erfindungsgemäßen Vorrichtung zum Einlegen von Mischkugeln in pharmazeutische Behältnisse sind in den Unteransprüchen aufgeführt.

Da es wie bereits erwähnt für die Ausrichtung der Behältnisse bzw. der Öffnungen der Behältnisse zu der Zuführeinrichtung für die Mischkugeln wichtig ist, dass die Aufnahmen des Aufnahmeelements zu der Zuführeinrichtung möglichst exakt ausgerichtet sind, sieht die Vorrichtung vor, dass die Zentriereinrichtung zur Ausrichtung des Aufnahmeelements wenigstens ein Zentrierelement aufweist, das mit einem Gegenelement des Aufnahmeelements formschlüssig zusammenwirkt. Gedacht ist hierbei an wenigstens einen, vorzugsweise wenigstens zwei Zentrierdorne oder ähnliches, die beispielsweise in Längsrichtung kegelförmig ausgebildet sind und die in (runde) Ausnehmungen bzw. Durchbrüche des Aufnahmeelements eintauchen können, um eine Zentrierung bzw. Positionierung des Aufnahmeelements zu den Zentrierdornen (welche eine definierte Position zu der Zuführeinrichtung aufweisen) zu ermöglichen.

Um eine möglichst hohe Leistung der Vorrichtung bei relativ einfachem konstruktiven Aufbau zu ermöglichen, ist es in einer bevorzugten Variante der Vorrichtung vorgesehen, dass das Aufnahmeelement mehrere, parallel zueinander angeordnete Reihen mit Aufnahmen für die pharmazeutischen Behältnisse aufweist, und dass die Zuführeinrichtung für jedes pharmazeutische Behältnis einer Reihe ein Zuführelement zum Zuführen einer Mischkugel aufweist, wobei die Zuführelemente an einem gemeinsamen Trägerelement angeordnet sind.

Um eine Bewegung der Zuführeinrichtung zwischen der Entnahmeposition der Mischkugeln aus dem Vorratsspeicher und der Übergabeposition der Mischkugeln in die Öffnungen der pharmazeutischen Behältnisse zu ermöglichen, ist es in Weiterbildung des zuletzt gemachten konstruktiven Vorschlags vorgesehen, dass das Trägerelement um eine vertikale Achse schwenkbar und in Richtung der vertikalen Achse hubbeweglich angeordnet ist.

Eine derartige Anordnung des Trägerelements ermöglicht es insbesondere auch, die wesentlichen Bestandteile der Zuführeinrichtung seitlich neben der Transporteinrichtung bzw. der pharmazeutischen Behältnisse anzuordnen, was beispielsweise eine laminare Strömung im Bereich der Öffnungen der pharmazeutischen Behältnisse zur Sterilhaltung der Behältnisse vereinfacht. Hierzu ist es vorgesehen, dass das Trägerelement zur Übernahme von Mischkugeln in eine seitlich der Förderstrecke der Transporteinrichtung befindliche Position verstellbar ist, wobei der Vorratsspeicher neben der Förderstrecke für die Transportbehältnisse angeordnet ist.

Um sicherzustellen, dass während der Bewegung der Zuführeinrichtung zwischen der Übernahmeposition und der Übergabeposition der Mischkugeln keine Mischkugeln verloren gehen bzw. die Mischkugeln tatsächlich in die Behältnisse eingelegt worden sind, ist es bevorzugt vorgesehen, dass der Zuführeinrichtung für die Mischkugeln eine Kontrolleinrichtung zur zumindest mittelbaren Erfassung der Abgabe von Mischkugeln in die pharmazeutischen Behältnisse zugeordnet ist. Eine derartige Kontrolleinrichtung kann beispielsweise in Form einer optischen Einrichtung ausgebildet sein, die mittels einer Lichtschranke oder ähnliches die Bewegung einer Mischkugel in Richtung der Öffnung eines Behältnisse oder die Anwesenheit einer Mischkugel erfasst. Auch sind beispielsweise Kamerasysteme oder ähnliches denkbar, die die Mischkugeln im Bereich der Zuführeinrichtung bzw. der pharmazeutischen Behältnisse erfassen.

Die Erfindung betrifft auch ein Verfahren zum Einlegen von Mischkugeln in pharmazeutische Behältnisse, wobei das Verfahren insbesondere eine Vorrichtung umfasst, die auf die oben beschriebene erfindungsgemäße Art und Weise ausgebildet ist. Das erfindungsgemäße Verfahren zeichnet sich dadurch aus, dass die Mischkugeln bei in einem Transportbehältnis angeordneten pharmazeutischen Behältnissen eingelegt werden. Ein derartiges Verfahren vereinfacht das Handling gegenüber dem Stand der Technik insoweit, als dass die Behältnisse nicht aus dem Transportbehältnis bzw. aus dem Aufnahmeelement für die pharmazeutischen Behältnisse in dem Transportbehältnis entnommen werden müssen.

In Weiterbildung des erfindungsgemäßen Verfahrens ist es vorgesehen, dass die Behältnisse nach dem Einlegen der Mischkugeln bei in dem Transportbehältnis angeordneten Behältnissen befüllt werden. Mit anderen Worten gesagt bedeutet dies, dass die Vorrichtung zum Einlegen der Mischkugeln in die Behältnisse als eine der ersten Stationen einer Abfüllanlage für die pharmazeutischen Behältnisse angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Kurze Beschreibung der Zeichnungen
- Fig. 1: zeigt eine perspektivische Ansicht auf eine Vorrichtung zum Einlegen von Mischkugeln in pharmazeutische Behältnisse,
- Fig. 2: eine perspektivische Ansicht auf ein Transportbehältnis im Bereich der Vorrichtung gemäß Fig. 1,
- Fig. 3: eine perspektivische Ansicht der Vorrichtung gemäß Fig. 1 während des Betriebs und
- Fig. 4: einen Längsschnitt durch die Vorrichtung gemäß Fig. 3 zur Erläuterung der Funktionsweise einer Kontrolleinrichtung.

### Ausführungsformen der Erfindung

In den Figuren sind gleiche oder ähnliche Elemente mit den gleichen Bezugsziffern versehen.

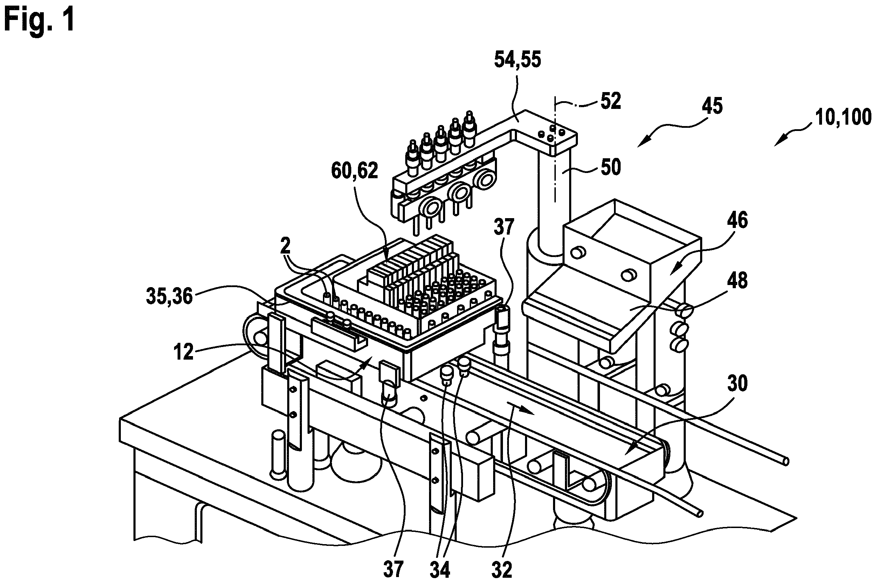

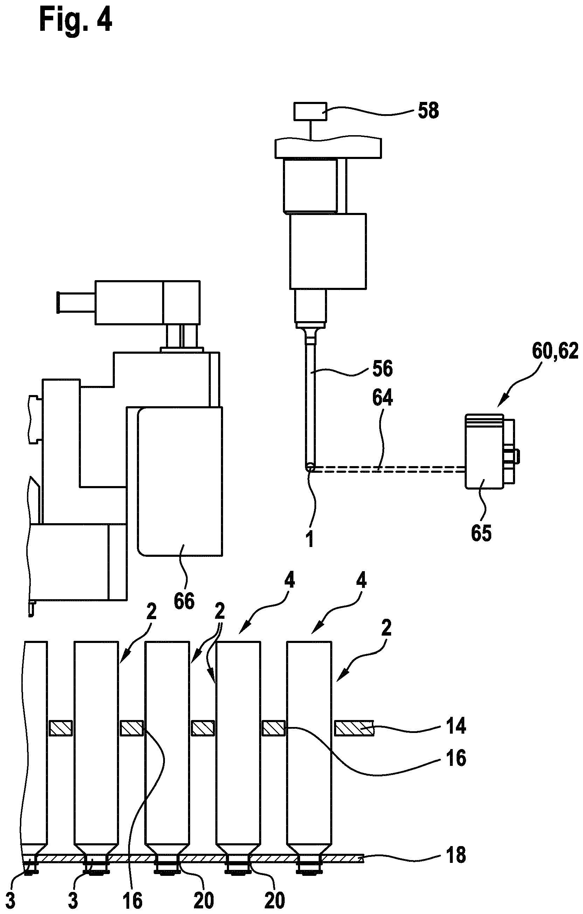

In der Fig. 1 ist eine Vorrichtung 10 zum Einlegen von Mischkugeln 1 (Fig. 4) in pharmazeutische Behältnisse 2 dargestellt. Bei den pharmazeutischen Behältnissen 2 handelt es sich insbesondere um Zylinderampullen, Vials oder ähnlichem, die röhrenförmig ausgebildet sind, und die an ihrem einen axialen Endbereich mit einer Bördelkappe 3 oder ähnlichem verschlossen sind, durch die durch Einstechen einer nicht dargestellten Nadel eine in dem Behältnis 2 befindliche Flüssigkeit bzw. Suspension (Pharmazeutika) entnommen werden kann. Das andere axiale Ende des Behältnisses 2 ist zunächst offen mit einer Öffnung 4 ausgebildet, die nach dem Abfüllen der Behältnisse 2 ebenfalls verschlossen wird.

Die Vorrichtung 10 ist insbesondere Bestandteil einer Abfüllanlage 100 zum Füllen und Verschließen der Behältnisse 2, wobei die Vorrichtung 10 als erste bzw. eine der ersten Stationen der Abfüllanlage 100 vorgesehen ist, sodass die Behältnisse 2 nach dem Durchlaufen der Vorrichtung 10 anschließend im Bereich der Abfüllanlage 100 befüllt und verschlossen werden.

Die von einem Verpacker bzw. Hersteller der Behältnisse 2 an die Abfüllanlage 100 bzw. die Vorrichtung 10 angelieferten Behältnisse 2 sind innerhalb eines wannenförmigen Transportbehältnisses 12 angeordnet. Das Transportbehältnis 12 umfasst in seinem Innenraum ein Aufnahmeelement 14 in Form eines Einlegebodens oder ähnlichem, der entsprechend der Anzahl der Behältnisse 2 eine Vielzahl von Aufnahmen 16 in Form von Durchgangsöffnungen bzw. Durchbrüchen aufweist, durch die die Behältnisse 2 formschlüssig aufgenommen bzw. positioniert sind. Im Bodenbereich des Transportbehältnisses 12 ist entsprechend der Darstellung der Fig. 4 beispielsweise eine Bodenplatte 18 mit Aufnahmen 20 vorgesehen, die sich im Bereich des sich verjüngenden axialen Endabschnittes der Behältnisse 2 befinden, sodass die Bodenplatte 18 einen axialen Endanschlag für die Behältnisse 2 ausbildet.

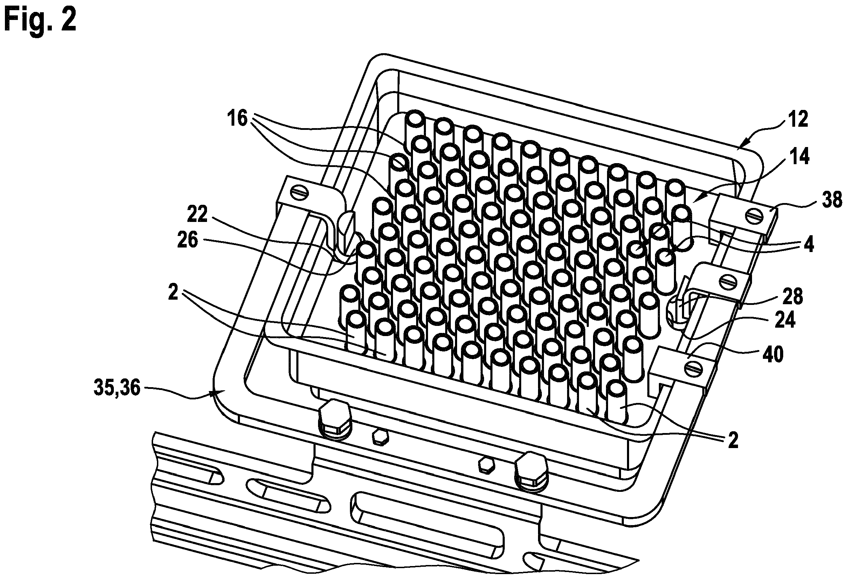

Die Behältnisse 2 sind innerhalb des Transportbehältnisses 12 stehend angeordnet, derart, dass die Längsachsen der Behältnisse 2 vertikal ausgerichtet sind und die Öffnungen 4 der Behältnisse 2 (bei geöffnetem Transportbehältnis 12) von der Oberseite des Transportbehältnisses 12 her zugänglich sind. Weiterhin weist insbesondere das eine in etwa rechteckförmige Außenform aufweisende Aufnahmeelement 14 entsprechend der Darstellung der Fig. 2 an zwei gegenüberliegenden Randbereichen beispielhaft jeweils eine nutförmige Aussparung 22, 24 auf, die dazu ausgebildet ist, mit jeweils einem in Art eines Zentrierdornes bzw. Zentrierelements ausgebildeten Gegenelement 26, 28 formschlüssig zusammenzuwirken, wie dies noch nachfolgend näher erläutert wird.

Die Vorrichtung 10 weist eine Transporteinrichtung 30 in Form eines Förderbandes oder ähnlichem auf, auf deren Oberseite die Transportbehältnisse 12 in einer Förderrichtung 32 entlanggefördert werden. Im Bereich der Transporteinrichtung 30 weist diese darüber hinaus in der Fig. 1 erkennbare Hubstempel 34 auf, die vertikal verstellbar angeordnet sind, und die dazu dienen, die Förderbewegung des Transportbehältnisses 12 auf der Transporteinrichtung 30 abzustoppen. Auch ist eine lediglich in der Fig. 1 dargestellte Hubeinrichtung mit weiteren Hubstempeln 37 in den Eckbereichen des Transportbehältnisses 12 vorgesehen, die das Transportbehältnis 12 nach dem Abstoppen anheben bzw. von der Transporteinrichtung 30 freistellen. Weiterhin weist die Vorrichtung 10 entsprechend der Darstellung der Fig. 1 und 2 eine in Förderrichtung 32 schrittweise verstellbare Positioniergabel 36 als Bestandteil einer Zentriereinrichtung 35 auf, an der die beiden Gegenelemente 26, 28 angeordnet bzw. befestigt sind. Zwei weitere Positionierelemente 38, 40, die an der Positioniergabel 36 angeordnet sind, dienen der Positionierung bzw. dem Halten des Transportbehältnisses 12. Wenn die Hubeinrichtung die Hubstempel 37 für das Transportbehältnis 12 aus einer abgesenkten Position in ihre angehobene Position bewegen, wird das Transportbehältnis 12 von der Transporteinrichtung 30 freigestellt bzw. angehoben. Dabei gelangen die Gegenelemente 26, 28 der Positioniergabel 36 in Wirkverbindung bzw. in formschlüssiger Anlage mit den Aussparungen 22, 24 des Aufnahmeelements 14, sodass das Aufnahmeelement 14 und somit auch die Behältnisse 2 zu einer Zuführeinrichtung 45 der Vorrichtung 10 positioniert bzw. ausgerichtet werden. Insbesondere ist dabei anhand der Fig. 2 erkennbar, dass die Behältnisse 2 innerhalb des Aufnahmeelements 14 bzw. der Aufnahmen 16 in einer quer bzw. senkrecht zur Förderrichtung 32 verlaufenden Richtung in Reihenform angeordnet sind, wobei die Reihen im Ausführungsbeispiel jeweils seitlich zueinander versetzt angeordnet sind.

Die Vorrichtung 10 umfasst weiterhin die bereits erwähnte Zuführeinrichtung 45 für die Mischkugeln 1. Die Zuführeinrichtung 45 weist seitlich neben der Transporteinrichtung 30 einen Kugelvorratsspeicher 46 mit einem Übernahmebereich 48 für die Mischkugeln 1.

Seitlich neben dem Kugelvorratsspeicher 46 befindet sich eine Säule 50 mit einem hubbeweglich und um eine Schwenkachse 52 drehbar gelagerten Schwenkarm 54 als Trägerelement 55. An dem Schwenkarm 54 bzw. dem Trägerelement 55 sind entsprechend des senkrecht zur Förderrichtung 32 ausgebildeten Abstands zwischen den Öffnungen 4 der Behältnisse 2 Vakuumnadeln 56 als Zuführelemente angeordnet, die dazu ausgebildet sind, jeweils eine Mischkugel 1 aus dem Übergabebereich 48 des Kugelvorratsspeichers 46 in einer Übernahmeposition zu übernehmen und in einer Übergabeposition, in der die Vakuumnadeln 56 mit den Öffnungen 4 der Behältnisse 2 ausgerichtet sind, die entsprechenden Mischkugeln 1 in die Behältnisse 2 einzulegen. Hierzu sind die Vakuumnadeln 56 jeweils mit einer im Ausführungsbeispiel gemeinsamen Unterdruckquelle 58 in Wirkverbindung angeordnet, wobei beispielsweise mittels geeigneter Ventileinrichtungen oder ähnliches an den Vakuumnadeln 56 ein Unterdruck anlegbar bzw. abschaltbar ist. Dadurch ist es möglich, in der Übernahmeposition im Übernahmebereich 48 durch Anlegen des Unterdrucks jeweils eine Mischkugel 1 an die Vakuumnadel 56 anzusaugen und in der Übergabeposition durch Ausschalten des Unterdrucks infolge von Schwerkraftwirkung die Mischkugel 1 in das Behältnis 2 abzulegen.

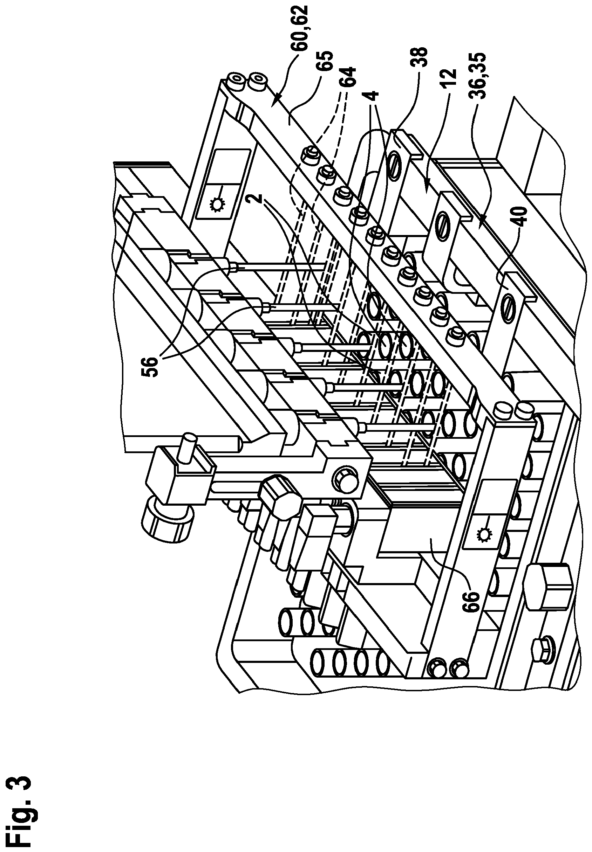

Um sicherzustellen, dass an jeder Vakuumnadel 56 jeweils eine Mischkugel 1 angeordnet ist bzw. die Mischkugel 1 in das Behältnis 2 eingelegt ist, ist entsprechend der Darstellung der Fig. 3 und 4 weiterhin eine Kontrolleinrichtung 60 vorgesehen. Die Kontrolleinrichtung 60 ist in Form einer optischen Einrichtung 62 ausgebildet, und umfasst beispielhaft jeweils einen Lichtstrahl 64, der von einem Sendeelement 65 ausgestrahlt und von einem Empfangselement 66 empfangen wird, sodass die Einrichtung 62 in Art einer Lichtschranke arbeitet. Befindet sich entsprechend der Darstellung der Fig. 4 bei einer definierten vertikalen Position der Vakuumnadel 56 eine Mischkugel 1 im Bereich des Lichtstrahls 64, so wird der Lichtstrahl 64 unterbrochen, sodass auf die Anwesenheit einer Mischkugel 1 geschlossen werden kann. Zum Einlegen der Mischkugeln 1 in die Behältnisse 2 lassen sich die Vakuumnadeln 56 anschließend weiter bis in die Behältnisse 2 hinein absenken.

Zum Einlegen der Mischkugeln 1 in die Behältnisse 2 werden für jeweils eine Reihe von Behältnissen 2 von den Vakuumnadeln 56 Mischkugeln 1 aus dem Übergabebereich 48 entnommen, und nach anschließendem Anheben, Schwenken und Absenken des Trägerelements 55 mit den Öffnungen 4 der Behältnisse 2 ausgerichtet. Durch Abschalten des Unterdrucks bei in den Behältnissen 2 eingetauchten Vakuumnadeln 56 lösen sich die Mischkugeln 1 von den Vakuumnadeln 56 und gelangen durch Schwerkraftwirkung in die Behältnisse 2. Durch die Abgesenkte Position der Vakuumnadeln 56 wird selbst bei einem Rückspringen der Mischkugeln 1 nach dem Aufprall ein Herausspringen aus dem jeweiligen Behältnis 2 verhindert. Anschließend wird die Positioniergabel 36 beispielsweise um den Abstand zwischen den Reihen zwischen den Behältnissen 2 in Förderrichtung 32 weiterbewegt, sodass sich die beschriebenen Vorgänge zum Ablegen der nächsten Mischkugeln 1 wiederholen. Sobald alle Behältnisse 2 mit der entsprechenden Anzahl der Mischkugeln 1 gefüllt sind, wird das Transportbehältnis 12 mit den pharmazeutischen Behältnissen 2 durch die Transporteinrichtung 30 weitergefördert und vorzugsweise mit weiterhin innerhalb des Transportbehältnisses 12 befindlichen Behältnissen 2 einer Abfülleinrichtung zugeführt.

Die soweit beschriebene Vorrichtung 10 kann in vielfältiger Art und Weise abgewandelt bzw. modifiziert werden, ohne vom Erfindungsgedanken abzuweichen. So könnte beispielsweise durch eine Fördereinheit für das Transportbehältnis 12, die diesen nach dem Freistellen von der Transporteinrichtung 30 quer zur Förderrichtung 32 schrittweise bewegt, eine größere Flexibilität hinsichtlich der Behältnisse 2 in dem Transportbehältnis 12 ermöglicht werden, da dann die Vakuumnadeln 56 beliebige Positionen im Bereich des Transportbehältnisses 12 einnehmen können.

## Patentansprüche

1. Vorrichtung (10) zum Einlegen von Mischkugeln (1) in pharmazeutische Behältnisse (2), mit einer Transporteinrichtung (30) zum vorzugsweise taktweisen Fördern der Behältnisse (2), und mit einer Zuführeinrichtung (45) für die Mischkugeln (1), wobei die Zuführeinrichtung (45) zwischen einer Entnahmeposition von Mischkugeln (1) aus einem Vorratsspeicher (46) und einer Übergabeposition der Mischkugeln (1) in die Behältnisse (2) beweglich ausgebildet ist,
**dadurch gekennzeichnet,**
**dass** die Transporteinrichtung (30) zum Transport von Transportbehältnissen (12) ausgebildet ist, wobei in den Transportbehältnissen (12) jeweils ein Aufnahmeelement (14) zur Aufnahme einer Vielzahl von Behältnissen (2) vorgesehen ist, und wobei eine Zentriereinrichtung (35) zum Zusammenwirken mit dem Aufnahmeelement (14) vorgesehen ist, die die in dem Aufnahmeelement (14) angeordneten Behältnisse (2) zu der Zuführeinrichtung (45) in der Übergabeposition ausrichten, wobei die Zentriereinrichtung (35) zur Ausrichtung des Aufnahmeelements (14) wenigstens ein Zentrierelement (26, 28) aufweist, das mit einem Gegenelement (22, 24) des Aufnahmeelements (14) formschlüssig zusammenwirkt.

2. Vorrichtung nach Anspruch 1,
**dadurch gekennzeichnet,**
**dass** die Zentriereinrichtung (35) zur Ausrichtung des Aufnahmeelements (14) mit einer Hubstempel (37) aufweisenden Hubeinrichtung zusammenwirkt, die dazu ausgebildet ist, das Transportbehältnis (12) von der Transporteinrichtung (30) anzuheben und freizustellen.

3. Vorrichtung nach Anspruch 1 oder 2,
**dadurch gekennzeichnet,**
**dass** das Aufnahmeelement (14) mehrere, parallel zueinander angeordnete Reihen mit Aufnahmen (16) für die Behältnisse (2) aufweist, und dass die Zuführeinrichtung (45) für jedes Behältnis (2) in einer Reihe ein Zuführelement (56) zum Zuführen einer Mischkugel (1) aufweist, wobei die Zuführelemente (56) an einem gemeinsamen Trägerelement (55) angeordnet sind.

4. Vorrichtung nach Anspruch 3,
**dadurch gekennzeichnet,**
**dass** das Trägerelement (55) um eine vertikal angeordnete Achse (52) schwenkbar und in Richtung der vertikalen Achse (52) hubbeweglich angeordnet ist.

5. Vorrichtung nach Anspruch 3 oder 4,
**dadurch gekennzeichnet,**
**dass** das Trägerelement (55) zur Übernahme von Mischkugeln (1) in eine seitlich der Transporteinrichtung (30) befindliche Position verstellbar ist, wobei der Vorratsspeicher (46) neben der seitlich neben der Transporteinrichtung (30) angeordnet ist.

6. Vorrichtung nach einem der voranstehenden Ansprüche,
**dadurch gekennzeichnet,**
**dass** der Zuführeinrichtung (45) eine Kontrolleinrichtung (60) zur zumindest mittelbaren Erfassung der Abgabe von Mischkugeln (1) in die Behältnisse (2) zugeordnet ist.

7. Vorrichtung nach Anspruch 6,
**dadurch gekennzeichnet,**
**dass** die Kontrolleinrichtung (60) eine als optische Einrichtung (62) ausgebildet ist.

8. Verfahren zum Einlegen von Mischkugeln (1) in pharmazeutische Behältnisse (2) mittels einer Vorrichtung (10), die nach einem der Ansprüche 1 bis 7 ausgebildet ist,
**dadurch gekennzeichnet,**
**dass** die Mischkugeln (1) bei in einem Transportbehältnis (12) angeordneten Behältnissen (2) eingelegt werden.

9. Verfahren nach Anspruch 8,
**dadurch gekennzeichnet,**
**dass** die Behältnisse (2) nach dem Einlegen der Mischkugeln (1) bei in dem Transportbehältnis (12) angeordneten Behältnissen (2) befüllt werden.

## Claims

1. Apparatus (10) for placing mixture balls (1) into pharmaceutical containers (2), comprising a transport device (30) for conveying the containers (2), preferably in cycles, and comprising a supply device (45) for the mixture balls (1), the supply device (45) being movable between a position for removing mixture balls (1) from a storage means (46) and a position for transferring the mixture balls (1) into the containers (2),
**characterized in that**
the transport device (30) is designed to transport transport containers (12), a receiving element (14) for receiving a plurality of containers (2) being provided in each of the transport containers (12), and a centering device (35) being provided for interaction with the receiving element (14), which centering device aligns the containers (2) arranged in the receiving element (14) with respect to the supply device (45) in the transfer position, the centering device (35) comprising at least one centering element (26, 28) for aligning the receiving element (14), which centering element interacts with a counter-element (22, 24) of the receiving element (14) in a form-fitting manner.

2. Apparatus according to claim 1,
**characterized in that**
the centering device (35) for aligning the receiving element (14) interacts with a lifting device having a lifting ram (37), which lifting device is designed to lift and release the transport container (12) from the transport device (30).

3. Apparatus according to claim 1 or claim 2,
**characterized in that**
the receiving element (14) comprises a plurality of rows, which are arranged in parallel with one another, of receptacles (16) for the containers (2), and **in that** the supply device (45), for each container (2) in a row, comprises a supply element (56) for supplying a mixture ball (1), the supply elements (56) being arranged on a common carrier element (55).

4. Apparatus according to claim 3,
**characterized in that**
the carrier element (55) is arranged so as to be pivotable about a vertically arranged axis (52) and movable in a lifting manner in the direction of the vertical axis (52).

5. Apparatus according to claim 3 or claim 4,
**characterized in that**
the carrier element (55) can be adjusted into a position located laterally with respect to the transport device (30) in order to pick up mixture balls (1), the storage means (46) being arranged laterally next to the transport device (30).

6. Apparatus according to any of the preceding claims,
**characterized in that**
a monitoring device (60) for at least indirectly detecting the delivery of mixture balls (1) into the containers (2) is associated with the supply device (45).

7. Apparatus according to claim 6,
**characterized in that**
the monitoring device (60) is designed as an optical device (62).

8. Method for placing mixture balls (1) into pharmaceutical containers (2), in particular by means of an apparatus (10) which is designed according to any of claims 1 to 7,
**characterized in that**
the mixture balls (1) are placed into containers (2) arranged in a transport container (12).

9. Method according to claim 8,
**characterized in that**
the containers (2) are filled after the mixture balls (1) have been placed into containers (2) arranged in the transport container (12).

## Revendications

1. Dispositif (10) pour la mise en place de billes de mélange (1) dans des récipients (2) pharmaceutiques, avec un système de transport (30) pour le convoyage de préférence cadencé des récipients (2), et avec un système d'amenée (45) pour les billes de mélange (1), dans lequel le système d'amenée (45) est réalisé de manière mobile entre une position de prélèvement de billes de mélange (1) d'un réservoir de stockage (46) et une position de transfert des billes de mélange (1) dans les récipients (2),
**caractérisé en ce**
**que** le système de transport (30) est réalisé pour le transport de récipients de transport (12), dans lequel respectivement un élément de réception (14) est prévu dans les récipients de transport (12) pour recevoir une pluralité de récipients (2), et dans lequel un système de centrage (35) est prévu pour coopérer avec l'élément de réception (14), qui aligne les récipients (2) disposés dans l'élément de réception (14) par rapport au système d'amenée (45) dans la position de transfert, dans lequel le système de centrage (35) présente, pour l'alignement de l'élément de réception (14), au moins un élément de centrage (26, 28) qui coopère par complémentarité de forme avec un contre-élément (22, 24) de l'élément de réception (14).

2. Dispositif selon la revendication 1,
**caractérisé en ce**
**que** le système de centrage (35) coopère, pour l'alignement de l'élément de réception (14), avec un système de levage présentant des poinçons de levage (37), qui est réalisé pour soulever le récipient de transport (12) du système de transport (30) et le dégager.

3. Dispositif selon la revendication 1 ou 2, **caractérisé en ce**
**que** l'élément de réception (14) présente plusieurs rangées disposées parallèlement les unes aux autres avec des logements (16) pour les récipients (2), et que le système d'amenée (45) présente pour chaque récipient (2) dans une rangée un élément d'amenée (56) pour l'amenée d'une bille de mélange (1), dans lequel les éléments d'amenée (56) sont disposés sur un élément de support (55) commun.

4. Dispositif selon la revendication 3,
**caractérisé en ce**
**que** l'élément de support (55) est disposé de manière à pouvoir pivoter autour d'un axe (52) disposé verticalement et à pouvoir effectuer un mouvement de course dans la direction de l'axe vertical (52).

5. Dispositif selon la revendication 3 ou 4,
**caractérisé en ce**
**que** l'élément de support (55) peut être déplacé dans une position se trouvant sur le côté du système de transport (30) pour la prise en charge de billes de mélange (1), dans lequel le réservoir de stockage (46) est disposé à côté du système de transport (30) sur le côté.

6. Dispositif selon l'une quelconque des revendications précédentes,
**caractérisé en ce**
**qu'**un système de contrôle (60) est associé au système d'amenée (45) pour détecter au moins indirectement la distribution de billes de mélange (1) dans les récipients (2).

7. Dispositif selon la revendication 6,
**caractérisé en ce**
**que** le système de contrôle (60) est réalisé comme un système optique (62).

8. Procédé pour la mise en place de billes de mélange (1) dans des récipients (2) pharmaceutiques au moyen d'un dispositif (10), qui est réalisé selon l'une quelconque des revendications 1 à 7,
**caractérisé en ce**
**que** les billes de mélange (1) sont mises en place dans des récipients (2) disposés dans un récipient de transport (12) .

9. Procédé selon la revendication 8,
**caractérisé en ce**
**que** les récipients (2) sont remplis après la mise en place des billes de mélange (1) pour des récipients (2) disposés dans le récipient de transport (12).
